(19) Europäisches Patentamt
European Patent Office
Office européen des brevets

(11) **EP 3 314 228 B1**

(12) **EUROPÄISCHE PATENTSCHRIFT**

(45) Veröffentlichungstag und Bekanntmachung des Hinweises auf die Patenterteilung:
**11.09.2019   Patentblatt 2019/37**

(21) Anmeldenummer: **16726547.9**

(22) Anmeldetag: **31.05.2016**

(51) Int Cl.:
**G01L 19/00** *(2006.01)*

(86) Internationale Anmeldenummer:
**PCT/EP2016/062219**

(87) Internationale Veröffentlichungsnummer:
**WO 2016/206923 (29.12.2016 Gazette 2016/52)**

(54) **DRUCKÜBERTRAGUNGSMODUL UND DRUCKMESSAUFNEHMER MIT EINEM DRUCKÜBERTRAGUNGSMODUL**

PRESSURE TRANSMISSION MODULE AND PRESSURE SENSOR HAVING A PRESSURE TRANSMISSION MODULE

MODULE DE TRANSMISSION DE PRESSION ET CAPTEUR DE MESURE DE PRESSION POURVU D'UN MODULE DE TRANSMISSION DE PRESSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.06.2015   DE 102015110351**

(43) Veröffentlichungstag der Anmeldung:
**02.05.2018   Patentblatt 2018/18**

(73) Patentinhaber: **Endress+Hauser SE+Co. KG**
**79689 Maulburg (DE)**

(72) Erfinder:
• **FUNKEN, Dieter**
**79539 Lörrach (DE)**

• **GETMAN, Igor**
**79539 Lörrach (DE)**
• **LOPATIN, Sergej**
**79540 Lörrach (DE)**

(74) Vertreter: **Andres, Angelika Maria**
**Endress+Hauser (Deutschland) AG+Co. KG**
**PatServe**
**Colmarer Strasse 6**
**79576 Weil am Rhein (DE)**

(56) Entgegenhaltungen:
DE-A1-102004 052 950    DE-A1-102006 049 942
DE-A1-102008 033 337    US-A1- 2014 090 476

**Beschreibung**

Die vorliegende Erfindung betrifft eine Druckübertragungsmodul zur Übertragung von Drücken, mit einer eine erste Druckkammer nach außen abschließenden, von außen mit einem zu übertragenden Druck beaufschlagbaren Trennmembran, einer eine zweite Druckkammer nach außen abschließenden Übertragungsmembran, und einem die erste Druckkammer mit der zweiten Druckkammer verbindenden Druckübertragungspfad, bei dem die erste und die zweite Druckkammer und der Druckübertragungspfad mit einer Übertragungsflüssigkeit gefüllt sind, über die ein von außen auf die Trennmembran einwirkender Druck auf die Übertragungsmembran übertragen wird, sowie einen mit dem Druckübertragungsmodul ausgestatteten Druckmessaufnehmer.

DE102006049942 offenbart einen Druckmittler.

In der industriellen Druckmesstechnik werden mit einer Übertragungsflüssigkeit gefüllte Druckmittler zur hydraulischen Übertragung von Drücken einsetzt. Diese umfassten regelmäßig eine eine Druckkammer nach außen abschließende, von außen mit einem zu übertragenden Druck beaufschlagbare Trennmembran, und einen die Druckkammer mit einem Zielort verbindenden Druckübertragungspfad.

Druckmittler werden in der Druckmesstechnik z.B. in Druckmessaufnehmern eingesetzt, die einen in einer Druckmesskammer angeordneten Drucksensor umfassen, der über den Druckübertragungspfad mit dem auf die Trennmembran einwirkenden Druck beaufschlagt wird. Dort dienen sie zum Schutz des Drucksensors vor unmittelbaren Kontakt mit einem Medium, dessen Druck gemessen werden soll. Darüber hinaus dienen sie zum Schutz des Drucksensors und daran angeschlossenen elektronischen Komponenten vor hohen ggfs. auf die Trennmembran einwirkenden Temperaturen, denen diese Komponenten regelmäßig nicht standhalten können.

Trennmembranen sind in der Regel kreisförmig oder weisen ein Wellenprofil mit konzentrisch zur Membranmitte angeordneten Wellen auf. Diese Trennmembranen weisen eine mit zunehmender Auslenkung der Trennmembran aus deren Mittellage stark nichtlinear ansteigende Steifigkeit auf. Je steifer eine Trennmembran ist, umso stärker verfälscht sie einen durch sie zu übertragenden Druck.

Zur Lösung dieses Problems sind in der DE 10 2005 023 021 A1 Druckmittler mit einer als Wellmembran ausgebildeten Trennmembran beschrieben, die mindestens zwei verschiedene energetisch günstige und damit stabile Ruhepositionen aufweisen. Diese Druckmittler werden mit einer vorbestimmten Menge an Übertragungsflüssigkeit befüllt, die derart bemessen ist, dass sich die Trennmembran im Betrieb in einer zwischen zwei benachbarten Ruhepositionen befindlichen Arbeitslage befindet. Das bedeutet jedoch, dass die Trennmembran bistabil ist und bereits geringe Auslenkungen der Trennmembran dazu führen, dass diese der nächstliegenden Ruheposition zustrebt.

Es gibt Anwendungen, in denen Trennmembranen von Druckmittlern hohen Temperaturen, insb. Temperaturen oberhalb von 200 °C, ausgesetzt werden. Bei diesen Temperaturen kann die Übertragungsflüssigkeit im hydraulischen Pfad Verdampfen bzw. Ausgasen. Besonders problematisch sind dabei Situationen, bei denen über die Trennmembran ein geringer Druck, insb. ein Absolutdruck von weniger als 100 mbar, übertragen werden soll. Das Verdampfen erfolgt im günstigsten Fall reversibel gemäß der Dampfdruckkurve für die jeweilige Übertragungsflüssigkeit, was insb. bei geringen zu übertragenden Drücken zu erheblichen Druckmessfehlern, und im schlimmsten Fall sogar zu einer plastischen Verformung der Trennmembran führen kann. Darüber hinaus besteht die Gefahr, dass irreversible Prozesse auftreten, bei denen sich aufgrund von Reaktionen mit Verunreinigungen oder mit den hydraulischen Pfad begrenzenden Oberflächen Zersetzungsprodukte bilden, die nach dem Ausgasen nicht mehr in Lösung gehen.

Zur Lösung dieses Problems ist in der DE 10 2004 052 950 A1 ein Druckmessaufnehmer beschrieben, der ein Sensormodul und ein diesem vorgeschaltetes Druckübertragungsmodul aufweist.

Das Druckübertragungsmodul umfasst

- eine eine erste Druckkammer nach außen abschließende, von außen mit einem zu übertragenden Druck beaufschlagbare Trennmembran,
- eine eine zweite Druckkammer nach außen abschließende Übertragungsmembran, und
- einen die erste Druckkammer mit der zweiten Druckkammer verbindenden Druckübertragungspfad, wobei
- die erste und die zweite Druckkammer und der Druckübertragungspfad mit einer Übertragungsflüssigkeit gefüllt sind, über die ein von außen auf die Trennmembran einwirkender Druck auf die Übertragungsmembran übertragen wird.

Das mit dem Übertragungsmodul verbundene Sensormodul umfasst

- einen Empfangskörper,

-- in dem eine Druckempfangskammer eingeschlossen ist, und
-- der mit dem Druckübertragungsmodul derart druckdicht verbunden ist, dass die Übertragungsmembran des Druckübertragungsmoduls die Druckempfangskammer nach außen abschließt,

- einen in einer Druckmesskammer angeordneten Drucksensor, und
- einen die Druckempfangskammer mit der Druckmesskammer verbindenden Druckübertragungspfad, wobei

- die Druckempfangskammer, die Druckmesskammer und der Druckübertragungspfad mit einer zweiten Übertragungsflüssigkeit gefüllt sind, über die ein über die Übertragungsmembran in die Druckempfangskammer übertragener Druck auf den Drucksensor übertragen wird.

Diese Lösung bietet den Vorteil, dass das Übertragungsmodul getrennt vom Sensormodul mit der Übertragungsflüssigkeit befüllt werden kann, wobei die Befüllung des Übertragungsmoduls gemäß der DE 10 2004 052 950 A1 vorzugsweise bei einer Abfülltemperatur erfolgt, die oberhalb einer maximalen Einsatztemperatur liegt, der die Trennmembran im Betrieb ausgesetzt werden darf. Dabei erfolgt die Befüllung gemäß der DE 10 2004 052 950 A1 vorzugsweise bei einem möglichst niedrigen Abfülldruck, der gemäß einer besonders bevorzugten Ausführungsform nicht mehr als 25 mbar beträgt. Auf diese Weise ist es möglich, das Übertragungsmodul bei deutlich höheren Temperaturen einzusetzen, als das bei Druckmittlern der Fall ist, die über deren hydraulischen Pfad unmittelbar mit der den Drucksensor enthaltenden Druckmesskammer verbunden sind. Auch hier ist jedoch die Einsatztemperatur, der die Trennmembran maximal ausgesetzt werden darf, nach oben begrenzt.

Es ist eine Aufgabe der vorliegenden Erfindung ein Druckübertragungsmodul zur Übertragung von Drücken, insb. Drücken von kleiner gleich 100 mbar, anzugeben, dass bei noch höheren Temperaturen eingesetzt werden kann.

Hierzu umfasst die Erfindung ein Druckübertragungsmodul zur Übertragung von Drücken, insb. von Drücken kleiner gleich 100 mbar, mit

- einer eine erste Druckkammer nach außen abschließenden, von außen mit einem zu übertragenden Druck beaufschlagbaren Trennmembran,
- einer eine zweite Druckkammer nach außen abschließenden Übertragungsmembran, und
- einem die erste Druckkammer mit der zweiten Druckkammer verbindenden Druckübertragungspfad, bei dem
- die erste und die zweite Druckkammer und der Druckübertragungspfad mit einer Übertragungsflüssigkeit gefüllt sind, über die ein von außen auf die Trennmembran einwirkender Druck auf die Übertragungsmembran übertragen wird,
  das sich dadurch auszeichnet, dass
- die Übertragungsflüssigkeit unter einem Vordruck, insb. einem Vordruck von größer gleich 30 mbar, insb. größer gleich 50 mbar, steht bei welchem die Trennmembran und die Übertragungsmembran aufgrund des Vordrucks permanent vorgespannt sind,
- die Trennmembran und die Übertragungsmembran unter dem Vordruck eine Ausgangslage einnehmen, aus der sie durch den zu übertragenden Druck ausgelenkt werden, und

- die Ausgangslagen von Trennmembran und Übertragungsmembran innerhalb eines von der Größe des Vordrucks und der Größe der zu übertragenden Drücke abhängigen Auslenkungsbereichs der jeweiligen Membran liegen, in dem Auslenkungen der jeweiligen Membran aus deren Ausgangslage aufgrund deren Formgebung einen nicht axisymmetrischen Anteil, insb. einen antisymmetrischen Anteil, aufweisen.

Eine erste Weiterbildung zeichnet sich dadurch aus, dass die Trennmembran und die Übertragungsmembran aus einem metallischen Werkstoff, insb. aus Edelstahl, Tantal oder Monell, bestehen, und eine Materialstärke in der Größenordnung von 30 $\mu$m bis 200 $\mu$m aufweisen.

Eine erste Variante zeichnet sich, dadurch aus, dass

- der Vordruck größer gleich 30 mbar ist, und insb. im Bereich von 30 mbar bis 200 mbar liegt,
- die Trennmembran und die Übertragungsmembran einen auslenkbaren Bereich mit einem Durchmesser von kleiner gleich 90 mm aufweisen, der insb. im Bereich in der Größenordnung von 90 mm bis 15 mm liegt, wobei der Durchmesser umso geringer ist, je größer der Vordruck ist.

Eine zweite Variante zeichnet sich, dadurch aus, dass

- der Vordruck größer gleich 50 mbar ist, und
- die Trennmembran und die Übertragungsmembran einen auslenkbaren Bereich mit einem Durchmesser von kleiner gleich 50 mm aufweisen.

Eine zweite Weiterbildung zeichnet sich dadurch aus, dass der Vordruck größer als ein durch die Übertragungsflüssigkeit im Druckübertragungsmodul ausgeübter hydrostatischer Druck ist, wobei der Vordruck insb. mindestens 10 mbar größer als ein bei einer Ausrichtung einer Längsachse des Druckübertragungsmoduls parallel zur Erdanziehungskraft auftretender maximaler hydrostatischer Druck ist.

Eine bevorzugte Ausgestaltung zeichnet sich dadurch aus, dass die Trennmembran und die Übertragungsmembran identische Membranen sind.

Eine dritte Weiterbildung zeichnet sich dadurch aus, dass der Druckübertragungspfad durch einen länglichen Körper verläuft, wobei der Körper insb. einen Außenumfang aufweist, der in von der ersten Druckkammer zur zweiten Druckkammer verlaufender Richtung variiert, insb. periodisch zwischen einem Minimalumfang und einem Maximalumfang variiert.

Eine weitere bevorzugte Ausgestaltung zeichnet sich dadurch aus, dass die Übertragungsflüssigkeit eine für Hochtemperaturanwendungen geeignete, insb.

unter Vakuum vorkonditionierte, Flüssigkeit, insb. ein Polyolefin, ein Glycolether, ein Halocarbon, ein Silikonöl oder ein Polymethylphenyl-Silaxan, ist.

Eine vierte Weiterbildung zeichnet sich dadurch aus, dass

- die Trennmembran aus einem korrosionsbestänidgen Metall, insb. aus Tantal, besteht, oder
- auf einer Außenseite der Trennmembran eine Beschichtung, insb. eine Goldschicht, eine Beschichtung aus einem Fluorpolymer, insb. aus Polytetraflourethylen, oder eine Beschichtung aus Tantal vorgesehen ist.

Eine bevorzugte Ausgestaltung zeichnet sich dadurch aus, dass die Trennmembran und die Übertragungsmembran jeweils eine Kontur mit einem einen zentralen, ebenen Bereich aufweisen, insb. einem zentralen Bereich mit einem Durchmesser von nicht mehr als 2*a/3, insb. nicht mehr als a/2, wobei a der Radius des auslenkbaren Bereichs der jeweiligen Membran ist, der von einem gewellten Bereich mit konzentrischen Wellenzügen, insb. konzentrischen Wellenzügen, deren Amplitude zunächst von innen nach außen hin abnimmt, wobei dann ein äußerster Wellenzug anschließt, der wieder eine größere Amplitude aufweist, umgeben ist.

Eine bevorzugte Ausgestaltung der letztgenannten Ausgestaltung zeichnet sich dadurch aus, dass

- die Amplitude des an den äußersten Wellenzug von Trennmembran und Übertragungsmembran angrenzenden Wellenzugs etwa 1/3 bis 2/3 der Amplitude des an den zentralen Bereich anschließenden Wellenzugs der jeweiligen Membran aufweist,
- die Wellenzüge abgesehen vom äußersten Wellenzug eine maximale Amplitude von nicht mehr als dem 4-fachen, insb. nicht mehr als dem 3-fachen, insb. nicht mehr als dem 2-fachen, der Materialstärke der jeweiligen Membran aufweisen, und/oder
- die Wellenzüge abgesehen vom äußersten Wellenzug eine Wellenlänge aufweisen, die von einem Wellenzug zum nächsten Wellenzug um nicht mehr als 20%, insb. nicht mehr als 10% variiert.

Eine fünfte Weiterbildung zeichnet sich dadurch aus, dass

- das Druckübertragungsmodul einen ersten Träger umfasst, in dem die nach außen durch die Trennmembran abgeschlossene erste Druckkammer eingeschlossen ist,
- der Träger derart ausgebildet ist, dass er mit einem Prozessanschluss, insb. einem Flansch, ausgestattet werden kann, und
- der Prozessanschluss als modulares Bauteil ausgebildet ist, das mit dem ohne Prozessanschluss vorgefertigten und mit Übertragungsflüssigkeit befüllten Druckübertragungsmodul verbindbar ist.

Weiter umfasst die Erfindung ein Verfahren zur Herstellung eines erfindungsgemäßen Druckübertragungsmoduls, das sich dadurch auszeichnet, dass

- die Trennmembran und Übertragungsmembran gefertigt werden, wobei deren Formgebung durch Abprägen auf einem entsprechend geformten Stempel erzeugt wird,
- die vorgeprägte Trennmembran druckdicht mit einem die erste Druckkammer einschließenden ersten Träger und die vorgeprägte Übertragungsmembran druckdicht mit einem die zweite Druckkammer einschließenden zweiten Träger verbunden werden, und
- ein nach außen durch die Trennmembran und die Übertragungsmembran abgeschlossener Innenraum des Druckübertragungsmoduls mit der Übertragungsflüssigkeit befüllt wird.

Eine Weiterbildung dieses Verfahrens zeichnet sich dadurch aus, dass der Vordruck im Innenraum des Druckübertragungsmoduls eingestellt wird, indem

- der Innenraum vor der Befüllung evakuiert wird, und
- ein dem einzustellenden Vordruck entsprechendes Volumen an Übertragungsflüssigkeit unter einem Befülldruck in den Innenraum eingebracht wird, insb. bei Raumtemperatur eingebracht wird,
- wobei das eingebrachte Volumen in Abhängigkeit von der Befülltemperatur derart bemessen wird, dass im Innenraum nach dem Verschließen des Innenraums der einzustellende Vordruck herrscht.

Weiter umfasst die Erfindung einen Druckmessaufnehmer mit einem erfindungsgemäßen Übertragungsmodul, der sich dadurch auszeichnet, dass der Druckmessaufnehmer ein Sensormodul umfasst,

- das einen Empfangskörper aufweist,

    -- in dem eine Druckempfangskammer eingeschlossen ist, und
    -- der mit dem Druckübertragungsmodul derart druckdicht verbunden ist, dass die Übertragungsmembran des Druckübertragungsmoduls die Druckempfangskammer nach außen abschließt,

- das einen in einer Druckmesskammer angeordneten Drucksensor aufweist,
- das einen die Druckempfangskammer mit der Druckmesskammer verbindenden Druckübertragungspfad aufweist, und
- dessen Druckempfangskammer, dessen Druckmesskammer und dessen Druckübertragungspfad mit einer zweiten Übertragungsflüssigkeit gefüllt sind, über die ein über die Übertragungsmembran in die Druckempfangskammer übertragener Druck auf den Drucksensor übertragen wird.

Die Erfindung und deren Vorteile werden nun anhand der Figuren der Zeichnung, in denen ein Ausführungsbeispiel dargestellt ist, näher erläutert. Gleiche Elemente sind in den Figuren mit gleichen Bezugszeichen versehen.

Fig. 1 zeigt: einen mit einem erfindungsgemäßen Druckübertragungsmodul ausgestatteten Druckmessaufnehmer;

Fig. 2 zeigt: die Trennmembran des Druckübertragungsmoduls von Fig. 1; und

Fig. 3 zeigt: eine Draufsicht auf den Prozessanschluss von Fig. 1.

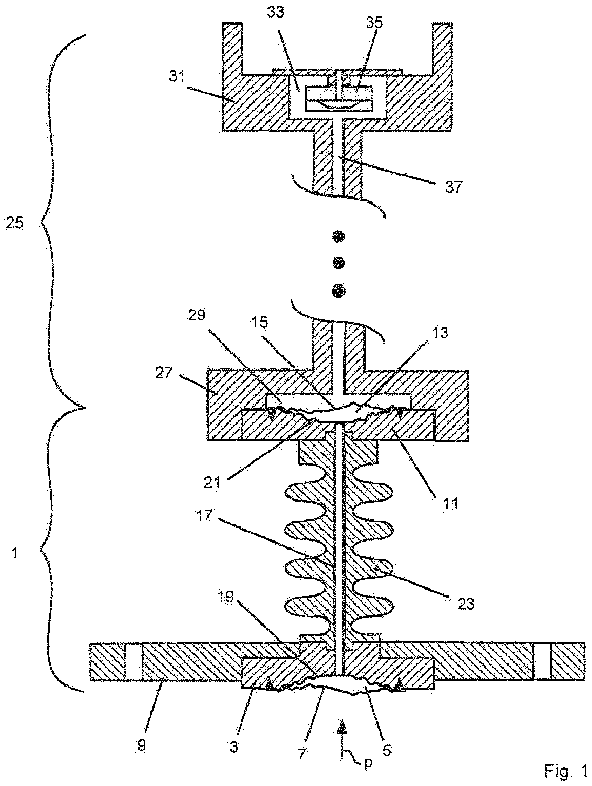

Fig. 1 zeigt einen Druckmessaufnehmer, der mit einem erfindungsgemäßen Druckübertragungsmodul 1 zur Übertragung von Drücken p ausgestattet ist. Das Druckübertragungsmodul 1 umfasst einen ersten Träger 3 in dem eine erste Druckkammer 5 eingeschlossen ist, die nach außen durch eine Trennmembran 7 abgeschlossen ist. Der Träger 1 ist vorzugsweise mit einem Prozessanschluss 9, z.B. einem Flansch, ausgestattet oder verbunden, über den der Träger 3 an einem Einsatzort montierbar ist. Am Einsatzort wird die Trennmembran 7 im Betrieb von außen mit einem Medium beaufschlagt, dessen Druck p mit dem Druckübertragungsmodul 1 übertragen werden soll.

Das Druckübertragungsmodul 1 weist auf dessen der Trennmembran 7 gegenüberliegenden Seite einen zweiten Träger 11 auf, in dem eine zweite Druckkammer 13 eingeschlossen ist, die nach außen durch eine Übertragungsmembran 15 abgeschlossen ist. Die erste und die zweite Druckkammer 5, 13 sind über einen Druckübertragungspfad 17, vorzugsweise eine Kapillarleitung, miteinander verbunden. Die erste Druckkammer 5, die zweite Druckkammer 13 und der Druckübertragungspfad 17 sind mit einer Übertragungsflüssigkeit befüllt, über die ein von außen auf die Trennmembran 7 einwirkender Druck p auf die Übertragungsmembran 15 übertragen wird.

Trennmembran 7 und Übertragungsmembran 15 sind mit dem jeweiligen Träger 3, 11 entlang einer umlaufenden Dichtfläche druckdicht verbunden, z.B. wie hier durch Dreiecke dargestellt, verschweißt. Die Dichtfläche begrenzt einen auslenkbaren Bereich der jeweiligen Membran, wobei in der ersten Druckkammer 5 unter der Trennmembran 7 und in der zweiten Druckkammer 13 unter der Übertragungsmembran 15 jeweils von der Lage der jeweiligen Membran abhängiges Volumen V an Übertragungsflüssigkeit eingeschlossen ist.

In beiden Druckkammern 5, 13 ist vorzugsweise jeweils ein in seiner Formgebung an die Formgebung der Trennmembran 7 bzw. der Übertragungsmembran 15 angepasstes Membranbett 19, 21 vorgesehen, auf dem die jeweilige Membran im Falle einer darauf von außen einwirkenden Überlast zur Auflage kommt.

Um eine Wärmeübertragung von der ggfs. einem sehr heißen Medium ausgesetzten Trennmembran 7 in Richtung der Übertragungsmembran 15 möglichst gering zu halten, verläuft der Druckübertragungspfad 17 vorzugsweise durch einen länglichen Körper 23, z.B. einen metallischen Körper 23. Zusätzlich weist der Körper 23 vorzugsweise einen Außenumfang auf, der in von der ersten Druckkammer 5 zur zweiten Druckkammer 13 verlaufender Richtung variiert, insb. periodisch zwischen einem Minimalumfang und einem Maximalumfang variiert. Hierdurch weist der Körper 23 eine vergrößerte äußere Mantelfläche auf, über die er durch Konvektion Wärme abgibt. Diese Maßnahme bewirkt zusammen mit der länglichen Form des Körpers 23, dass über die Trennmembran 7 weniger Übertragungsflüssigkeit auf weniger hohe Temperaturen aufgeheizt wird. Das Übertragungsmodul 1 kann somit kürzer und kompakter ausgebildet sein. Dadurch reduziert sich die Länge des Druckübertragungspfads 17 und damit auch die benötigte Menge an Übertragungsflüssigkeit.

Die Übertragungsflüssigkeit ist vorzugsweise eine für Hochtemperaturanwendungen geeignete, vorzugsweise unter Vakuum vorkonditionierte, möglichst inkompressible Flüssigkeit mit einem möglichst geringen thermischen Ausdehnungskoeffizienten. Hierzu eignen sich insb. in der Vakuumtechnik, z.B. für Vakuumpumpen, eingesetzte Flüssigkeiten, wie zum Beispiel Polyolefine, Glycolether, Halocarbone, Silikonöle oder Polymethylphenyl-Silaxane. Alternativ können auch andere hierfür geeignete Übertragungsflüssigkeiten, wie z.B. von einem Kunden gewünschte Spezialöle, eingesetzt werden.

Erfindungsgemäß steht die Übertragungsflüssigkeit unter einem Vordruck $p_V$. Der Vordruck $p_V$ bezeichnet den Druck unter dem die Übertragungsflüssigkeit im Inneren des Druckübertragungsmoduls 1 steht. Er entspricht dem Druck, der nach der Befüllung und dem Verschließen des Druckübertragungsmoduls 1 im Inneren des Druckübertragungsmoduls 1 herrscht. Der Vordruck $p_V$ kann je nach Art des Befüllverfahrens und des anschließenden Verschließens des befüllten Innenraums durchaus deutlich von einem Befüll- oder Abfülldruck, unter dem die Übertragungsflüssigkeit in den Innenraum eingebracht wird, unterscheiden.

Der Vordruck $p_V$ wirkt dem Dampfdruck der Übertragungsflüssigkeit entgegen. Dadurch wird ein Ausgasen oder Verdampfen der Übertragungsflüssigkeit insgesamt reduziert und setzt erst bei deutlich höheren Temperaturen ein. Der Temperaturbereich, in dem das Druckübertragungsmodul 1 eingesetzt werden kann, ist somit umso größer, je größer der Vordruck $p_V$ ist.

Mit dem erfindungsgemäßen Druckübertragungsmodul 1 ist bereits bei einem Vordruck $p_V$ von größer gleich 30 mbar eine merkliche Vergrößerung der maximalen Einsatztemperatur, der die Trennmembran 7 im Betrieb ausgesetzt werden darf, erreichbar. Bei einem

Vordruck $p_v$ von größer gleich 50 mbar sind sogar Einsatztemperaturen in der Größenordnung von bis zu 400 °C erreichbar.

Dabei ist der Vordruck $p_v$ vorzugsweise deutlich größer als ein durch die Übertragungsflüssigkeit im Druckübertragungsmodul 1 ausgeübter hydrostatischer Druck. Vorzugsweise ist der Vordruck $p_v$ mindestens 10 mbar größer als der maximale hydrostatische Druck. Der hydrostatischer Druck ist abhängig von der Einbaulage des Druckübertragungsmoduls 1 relativ zur Erdanziehungskraft. Der maximale hydrostatische Druck tritt auf, wenn die Längsachse des Druckübertragungsmoduls 1 parallel zur Erdanziehungskraft ausgerichtet ist. In dieser Einbaulage ist er abhängig vom Abstand zwischen Trennmembran 7 und Übertragungsmembran 15.

Der Vordruck $p_v$ bewirkt eine Vorspannung der Trennmembran 7 und der Übertragungsmembran 15. Der Vordruck $p_v$ wirkt auf die Innenseiten von Trennmembran 7 und Übertragungsmembran 15 und drückt beide Membranen nach außen. Entsprechend nehmen die Trennmembran 7 und die Übertragungsmembran 15 ohne Druckbeaufschlagung von außen eine von der Größe des Vordrucks $p_v$ abhängige Ausgangslage ein, ausgehend von der sie dann durch den im Betrieb der Trennmembran 7 zugeführten zu übertragenden Druck p ausgelenkt werden.

Axisymmetrische Membranen, wie z.B. die eingangs genannten und insb. in der DE 10 2005 023 021 A1 beschriebenen Wellmembranen mit konzentrischen Wellen, führen axisymmetrische Auslenkungen aus deren über das Befüllvolumen an Übertragungsflüssigkeit eingestellten Ausgangslage aus. Eine axisymmetrische Auslenkung einer Membran bezeichnet eine Auslenkung, bei der eine von einer Änderung $\Delta V$ eines unter der Membran eingeschlossenen Volumens V abhängige Auslenkung zs, mit

$zs(r, \varphi, \Delta V) := z(r, \varphi, \Delta V) - z(r, \varphi, 0)$ der z-Koordinate der einzelnen Punkte $(z, r, \varphi)$ im Wesentlichen unabhängig von der Raumrichtung $\varphi$ in der senkrecht zur z-Achse verlaufenden Ebene ist, wobei r den Abstand zur z-Achse und $\varphi$ die Raumrichtung angibt.

Membranen, die aufgrund ihrer Formgebung ausschließlich axisymmetrische Auslenkungen ausführen, weisen regelmäßig eine instabile Ausgangslage auf. Entsprechend führt bereits eine geringfügige Auslenkung einer axisymmetrischen Membran aus deren Ausgangslage dazu, dass die Membran ihrer nächstliegenden energetisch günstigeren Lage zustrebt. Hierdurch wird die Membran steifer und ein über die Membran abfallender, die Druckübertragung verfälschender Druck steigt an. Würde man eine axissymmetrische Membran durch einen von innen darauf einwirkenden Vordruck nach außen auslenken, würde dieser nachteilige Effekt bereits in der durch den Vordruck bewirkten Ausgangslage auftreten. Das würde zu einer permanenten Erhöhung der Membransteifigkeit und einer Verschlechterung der Druckübertragungseigenschaften führen.

Um trotz der durch den Vordruck $p_v$ bewirkten

Vorspannung von Trennmembran 7 und die Übertragungsmembran 15 eine möglichst unverfälschte Druckübertragung zu gewährleisten, werden in dem erfindungsgemäßen Druckübertragungsmodul 1 als Trennmembran 7 und als Übertragungsmembran 15 Membranen eingesetzt, deren Auslenkungen aus deren über den Vordruck $p_v$ eingestellten Ausgangslage einen nicht axisymmetrischen Anteil aufweisen.

Hierzu werden Trennmembran 7 und Übertragungsmembran 15 vorzugsweise derart ausgebildet, dass deren Auslenkung aus der vom Vordruck $p_v$ abhängigen Ausgangslage eine im Wesentlichen axisymmetrische Auslenkung ist, der eine nicht axisymmetrische Auslenkung überlagert ist.

Der nicht axisymmetrische Anteil der Auslenkung von Trennmembran 7 und Übertragungsmembran 15 aus der vom Vordruck $p_v$ abhängigen Ausgangslage ist vorzugsweise ein antisymmetrischer Anteil. In dem Fall gilt für die von einer Änderung $\Delta V$ des unter der jeweiligen Membran eingeschlossenen Volumens V abhängige, durch den antisymmetrischen Anteil bewirkte Auslenkung zas der z-Koordinate der einzelnen Punkte $(z, r, \varphi)$ der Trennmembran 7 und der Übertragungsmembran 15 aus deren vom Vordruck $p_v$ abhängigen Ausgangslage: $zas(r, \varphi, \Delta V) \cong - zas(r, \varphi+180°, \Delta V)$, wobei der Wert für $zas(r, \varphi, \Delta V)$ gleich der Differenz:

$$zas(r, \varphi, \Delta V) := z(r, \varphi, \Delta V) - zs(r, \varphi, \Delta V)$$

der tatsächlichen z-Koordinate $z(r, \varphi, \Delta V)$ eines Punktes der jeweiligen Membran und der durch den axisymmetrischen Anteil der Auslenkung bewirkten z-Koordinate $zs(r, \varphi, \Delta V)$ des Punktes ist. Dabei kann die Funktion $zs(r, \varphi, \Delta V)$ zum Beispiel so gewählt werden, dass Integral des Quadrats von $zas(r, \varphi, \Delta V)$ über den auslenkbaren Bereich der jeweiligen Membran ein Minimum aufweist und insbesondere den Wert Null annimmt.

Als Trennmembran 7 und als Übertragungsmembran 15 werden hierzu vorzugsweise in der DE 10 2008 033 337 A1 beschriebene Trennmembranen verwendet. Diese

Trennmembranen weisen eine aufgeprägte Kontur auf, die derart ausgebildet ist, dass von einer in der DE 10 2008 033 337 A1 als Referenzlage bezeichneten Ausgangslage ausgehende Auslenkungen der Trennmembran einen nicht axisymmetrischen Anteil aufweisen. Über den nicht axisymmetrischen Anteil der Auslenkungen der in der DE 10 2008 033 337 A1 beschriebenen Trennmembranen wird erreicht, dass diese Membranen in einem vergleichsweise großen Bereich von Auslenkungen energetisch nahezu gleichwertige Zustände einnehmen. Im Unterschied zu Membranen mit rein axisymmetrischer Auslenkung, bei denen die Steifigkeit der Membran mit zunehmender Auslenkung drastisch ansteigt, weisen diese Membran in einem vergleichsweise großen Bereich von Auslenkungen eine deutlich geringere und mit zunehmender Auslenkung deutlich weniger stark ansteigende Steifigkeit auf. Aufgrund des großen Auslenkungsbereichs in dem die Auslenkungen dieser Trennmembranen einen nicht axisymmetrischen Anteil aufweisen, ist es möglich, die Referenzlage ausgehend von der diese Trennmembran im Betrieb ausgelenkt wird innerhalb gewisser Grenzen zu verschieben.

In dem erfindungsgemäßen Druckübertragungsmodul 1 werden diese Trennmembranen als Trennmembran 7 und als Übertragungsmembran 15 eingesetzt, wobei sie hierzu derart ausgelegt werden, dass deren Referenzlage deren durch den Vordruck $p_V$ bewirkten Ausgangslage entspricht, und die vom zu übertragenden Druck p abhängigen Auslenkungen von Trennmembran 7 und Übertragungsmembran 15 zu beiden Seiten dieser Ausgangslage innerhalb des Druckbereichs der zu übertragenden Drücke p einen nicht axisymmetrischen Anteil, insb. einen antisymmetrischen Anteil, aufweisen. Trennmembran 7 und Übertragungsmembran 15 werden also in einem Auslenkungsbereich der jeweiligen Membran betrieben, in dem Auslenkungen der jeweiligen Membran aus deren durch den Vordruck $p_V$ bewirkten Ausgangslage aufgrund der Formgebung dieser Membranen einen nicht axisymmetrischen Anteil, insb. einen antisymmetrischen Anteil, aufweisen.

Trennmembran 7 und Übertragungsmembran 15 sind vorzugsweise derart ausgebildet, dass der nicht axisymmetrische Anteil der Auslenkung von Trennmembran 7 und Übertragungsmembran 15 seine maximale Größe dann erreicht, wenn sich Trennmembran 7 und Übertragungsmembran 15 in deren vom Vordruck $p_V$ abhängigen Ausgangslage befinden. Das Maximum der Auslenkung des nicht axisymmetrischen Auslenkungsmodus kann beispielsweise das 2 bis 5 fache der Materialstärke h von Trennmembran 7 und Übertragungsmembran 15 betragen.

Ausgehend von der vom Vordruck $p_V$ abhängigen Ausgangslage nimmt der nicht axisymmetrische Anteil der Auslenkungen von Trennmembran 7 und Übertragungsmembran 15 mit zunehmender Auslenkung dieser Membranen aus deren vom Vordruck $p_V$ abhängigen Ausgangslage ab.

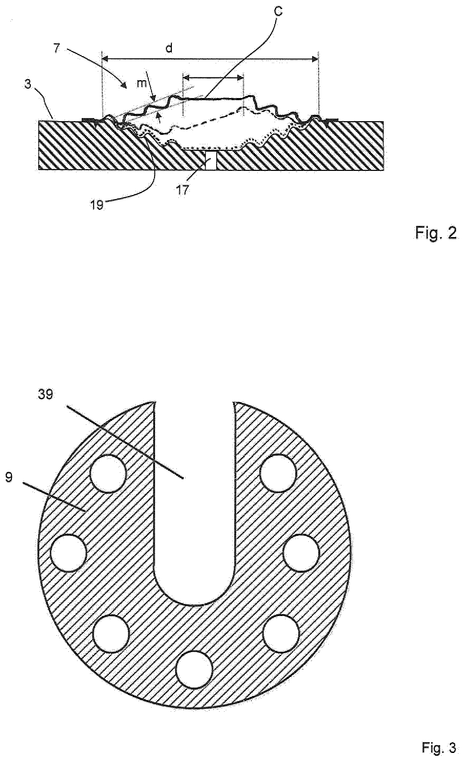

Trennmembran 7 und Übertragungsmembran 15 weisen beispielsweise die in Fig. 2 am Beispiel der auf den ersten Träger 3 aufgeschweißten Trennmembran 7 gezeigte und in der DE 10 2012 110 771 A1 beschriebene Formgebung auf. Dabei weist die Kontur der Trennmembran 7 einen zentralen, ebenen Bereich C auf, der von einem gewellten Bereich m mit vorzugsweise konzentrischen Wellenzügen umgeben ist. Der zentrale Bereich C hat vorzugsweise einen Durchmesser von nicht mehr als 2*a/3, besonders bevorzugt nicht mehr als a/2, wobei a der Radius des auslenkbaren Bereichs der Trennmembran 7 ist. Die Amplitude der Wellenzüge des gewellten Bereichs muss nicht konstant sein. Die Amplitude der Wellenzüge kann, wie in Fig. 2 gezeigt, von innen nach außen hin zunächst abnehmen, wobei dann ein äußerster Wellenzug anschließt, der wieder eine größere Amplitude aufweisen kann. Die Amplitude des an den äußersten Wellenzug angrenzenden Wellenzugs kann beispielsweise etwa 1/3 bis 2/3 der Amplitude des an den zentralen Bereich anschließenden Wellenzugs aufweisen. Die Wellenzüge weisen, abgesehen vom äußersten Wellenzug, beispielsweise eine maximale Amplitude von nicht mehr als dem 4-fachen, vorzugsweise nicht mehr als dem 3-fachen, und weiter bevorzugt nicht mehr als dem 2-fachen der Materialstärke h der Trennmembran 7 auf. Die Wellenzüge weisen, abgesehen vom äußersten Wellenzug vorzugsweise Wellenlängen auf, die von einem Wellenzug zum nächsten Wellenzug um nicht mehr als 20%, vorzugsweise nicht mehr als 10%, variieren.

Vorzugsweise werden Materialstärke h und Durchmessers d des auslenkbaren Bereichs der Trennmembran 7 und der Übertragungsmembran 15 unter Berücksichtigung von deren Formgebung an die Größe des Vordrucks $p_V$ angepasst. Dabei weisen Trennmembran 7 und Übertragungsmembran 15 vorzugsweise jeweils eine Materialstärke h auf, die umso größer ist, je größer der Vordruck $p_V$ ist. Zusätzlich weisen Trennmembran 7 und Übertragungsmembran 15 vorzugsweise jeweils einen Durchmesser d auf, der umso kleiner ist, je größer der Vordruck $p_V$ ist. Dabei ist im Hinblick auf die Vermeidung oder Reduktion des Ausgasens der Übertragungsflüssigkeit bei hohen Temperaturen von Vorteil, wenn der Vordruck $p_V$ möglichst groß ist.

Eine technisch sinnvoll realisierbare Obergrenze für den Vordruck $p_V$ dürfte nach heutiger Einschätzung bei einem Vordruck $p_V$ in der Größenordnung von etwa 200 mbar erreicht sein.

Trennmembran 7 und Übertragungsmembran 15 bestehen vorzugsweise aus einem metallischen Werkstoff, wie z.B. Edelstahl, Tantal oder Monell. Metallische Trennmembranen 7 und Übertragungsmembranen 15 weisen eine in Abhängigkeit von deren Formgebung und dem Vordruck $p_V$ vorgegebene Materialstärke h auf, die vorzugsweise im Bereich von 30 $\mu$m bis 200 $\mu$m liegt.

Es gibt Anwendungen, bei denen die mit dem zu messenden Druck p zu beaufschlagende Außenseite der Trennmembran 7 unter Umständen Medien ausgesetzt sein kann, die die Trennmembran 7 angreifen. In dem Fall besteht die Trennmembran 7 vorzugsweise aus einem gegenüber dem Medium beständigen Metall, z.B. aus korrosionsbeständigem Tantal. Alternativ kann die Außenseite der Trennmembran 7 mit einer gegenüber dem Medium beständigen Beschichtung versehen sein. Als Beschichtung kann z.B. eine Goldschicht vorgesehen werden, die z.B. galvanisch auf die Außenseite aufgebracht werden kann. Alternativ kann auf der Außenseite der Trennmembran 15 eine Beschichtung aus einem Fluorpolymer, z.B. aus Polytetraflourethylen, aufgebracht werden. Eine weitere Alternative stellt eine Beschichtung aus Tantal dar, die z.B. auf eine Trennmembran 7 aus einem Stahl oder Edelstahl aufgebracht werden kann. Derartige Beschichtungen sind in der am 10.03.2014 eingereichten Deutschen Patentanmeldung der Anmelderin mit dem Aktenzeichen 10 2014 103142.3 beschrieben.

Dabei ist die Steifigkeit von Trennmembran 7 und Übertragungsmembran 15 umso geringer, je größer ihr Druckmesser d ist. Eine Vergrößerung des Durchmessers d von Trennmembran 7 und Übertragungsmembran 15 vergrößert das unter der jeweiligen Membran eingeschlossene Volumen an Übertragungsflüssigkeit. Die Übertragungsflüssigkeit weist regelmäßig einen von den sie umschließenden Werkstoffen, z.B. Edelstahl, verschiedenen thermischen Ausdehnungskoeffizienten auf. Hier ist also ein Optimum für den Durchmesser d zu finden, bei dem bei möglichst hohem Vordruck $p_V$ eine möglichst geringe Steifigkeit und ein möglichst geringes Volumen an Übertragungsflüssigkeit erzielt werden kann.

Bei Vordrücken $p_V$ im Bereich von 30 mbar bis 200 mbar weisen Trennmembran 7 und Übertragungsmembran 15 vorzugsweise jeweils einen Durchmesser d von kleiner gleich 90 mm auf. In dem vorgenannten Vordruckbereich liegen die Durchmesser d vorzugsweise in einem Bereich in der Größenordnung von 90 mm bis 15 mm, wobei der Durchmesser d umso geringer ist, je größer der Vordruck $p_V$ ist. Bei Vordrücken $p_V$ von größer gleich 50 mbar weisen Trennmembran 7 und Übertragungsmembran 15 vorzugsweise jeweils einen Durchmesser d von kleiner gleich 50 mm auf.

Zur Erzielung eines nicht axisymmetrischen Anteils der Auslenkung von Trennmembran 5 und Übertragungsmembran 13 erforderliche Asymmetrie wird vorzugsweise auf die in der DE 10 2008 033 337 A1 beschriebene Weise durch eine entsprechende Ausbildung oder Anregung der aufgeprägten Kontur der jeweiligen Membran erzeugt. Im Anschluss daran werden die vorgeprägte Trennmembran 7 und die vorgeprägte Übertragungsmembran 15 druckdicht mit dem jeweiligen Träger 3, 11 verbunden, z.B. aufgeschweißt.

Da die Auslegung der Trennmembran 7 und der Übertragungsmembran 15 jeweils für den gleichen Vordruck $p_V$ und den gleichen Druckbereich zu übertragender Drücke p erfolgt, sind die beiden Membranen vorzugsweise identisch. In dem Fall sind natürlich auch die erste und die zweite Druckkammer 5, 13 vorzugsweise baugleich.

Der Vordruck $p_V$ im Innenraum des Druckübertragungsmoduls 1 wird vorzugsweise bei dessen Befüllung eingestellt. Hierzu weist das Druckübertragungsmodul 1 einen in dessen zu befüllenden Innenraum mündenden, in Fig. 1 nicht dargestellten, Befüllkanal auf, über den die Übertragungsflüssigkeit eingebracht wird. Befüllverfahren, Ausgestaltungen des Befüllkanals und dessen Verschluss sind dem Fachmann geläufig, so dass nachfolgend nur im Bezug auf das erfindungsgemäße Übertragungsmodul 1 bestehende Besonderheiten näher erläutert sind.

Vor der Befüllung wird der Innenraum evakuiert. Anschließend wird ein dem einzustellenden Vordruck $p_V$ entsprechendes Volumen an Übertragungsflüssigkeit unter einem Befülldruck in den Innenraum eingebracht. Der Befülldruck entspricht dem Druck unter dem die Übertragungsflüssigkeit in den Innenraum gedrückt wird. Der Befülldruck ist streng zu unterscheiden von dem Vordruck $p_V$ der am Ende der Befüllung nach dem Verschließen des Innenraums in dem Innenraum herrscht. Die Befüllung kann bei Raumtemperatur erfolgen. Dabei ist das eingebrachte Volumen in Abhängigkeit von der Befülltemperatur derart zu bemessen, dass im Innenraum nach dem Verschließen des Innenraums der einzustellende Vordruck $p_V$ herrscht.

Aufgrund des Vordrucks $p_V$ sind Trennmembranen 7 und Übertragungsmembranen 15 permanent vorgespannt. Dabei nehmen sie ihre Ausgangslage ein, in der sie die nicht axisymmetrische Formgebung aufweisen.

Bei dem in Fig. 1 dargestellten Anwendungsbeispiel für ein erfindungsgemäßes Übertragungsmodul 1, ist das Übertragungsmodul 1 in dem dargestellten Druckmessaufnehmer einem Sensormodul 25 vorgeschaltet.

Das Sensormodul 25 umfasst einen Empfangskörper 27, in dem eine Druckempfangskammer 29 eingeschlossen ist. Der Empfangskörper 27 ist derart mit dem Übertragungsmodul 1 druckdicht verbunden, z.B. verschweißt, dass die Übertragungsmembran 15 des Druckübertragungsmoduls 1 die Druckempfangskammer 29 des Sensormoduls 25 nach außen abschließt.

Das Sensormodul 25 umfasst eine in einem Gehäuse 31 eingeschlossene Druckmesskammer 33, in der ein Drucksensor 35 angeordnet ist. Druckmesskammer 33 und Druckempfangskammer 29 sind miteinander über einen Druckübertragungspfad 37, vorzugsweise eine Kapillarleitung, verbunden. Druckempfangskammer 29, Druckmesskammer 33 und der Druckübertragungspfad 37 sind mit einer zweiten Übertragungsflüssigkeit gefüllt, über die ein über die Übertragungsmembran 15 in die Druckempfangskammer 29 übertragener Druck auf den Drucksensor 35 übertragen wird.

Aufgrund des vorgeschalteten Übertragungsmoduls 1, ist das Sensormodul 25 auch bei Anwendungen, in denen die Trennmembran 7 sehr hohen Einsatztemperaturen, insb. Temperaturen von bis zu 400 °C, ausgesetzt ist, nur einer deutlich geringeren Temperatur ausgesetzt. Das bietet den Vorteil, dass das Sensormodul 25 mit einer deutlich kostengünsteren Übertragungsflüssigkeit befüllt werden kann. Dabei bietet der modulare Aufbau des Druckmessaufnehmers den Vorteil, dass die Druckübertragungsmodule 1 z.B. zentral vorgefertigt und an anderen Orten mit dezentral gefertigten Sensormodulen 25 verbunden, werden können, die dann mit der zweiten Übertragungflüssigkeit befüllt werden können, ohne dass hierzu die zur Herstellung und Befüllung des Übertragungsmoduls 1 erforderlichen Spezialvorrichtungen und Spezialkennnisse erforderlich sind.

Vorzugsweise ist der Prozessanschluss 9 des Druckübertragungsmoduls 1 als modulares Bauteil ausgebildet. Das bietet den Vorteil, dass die Druckübertragungsmodule 1 zunächst zentral ohne Prozessanschluss 9 vorgefertigt und befüllt werden können, und dezentral mit dem für die jeweilige Anwendung benötigten Prozessanschluss 9 ausgestattet werden können. Hierzu kann der Prozessanschluss 9 nachträglich, z.B. durch Schweißen mit dem Träger 3 des Druckübertragungsmodul 1 verbunden werden. Hierzu kann der Prozessanschluss 9 z.B. als im Wesentlichen scheibenförmiger Flansch ausgebildet sein, der einen in der Draufsicht in Fig. 3 dargestellten von der Mitte zum Rand führenden Schlitz 39 aufweist, der es ermöglicht den Flansch nachträglich über den Träger 3 des vorgefertigten Druckübertragungsmoduls 1 zu stülpen, und dort zu verschweißen. Alternativ können natürlich auch andere modulare Ausgestaltungen eingesetzt werden.

Die Erfindung ist völlig analog auch in Differenzdruckmessaufnehmern einsetzbar, die dann entsprechend mit zwei erfindungsgemäßen Druckübertragungsmodulen 1 auszustatten sind, die jeweils einen der beiden Drücke, deren Differenz gemessen werden soll, auf ein zwei Druckempfangskammern aufweisendes mit einem Differenzdrucksensor ausgestattetes Sensormodul übertragen.

| | |
|---|---|
| 1 | Druckübertragungsmodul |
| 3 | erster Träger |
| 5 | erste Druckkammer |
| 7 | Trennmembran |
| 9 | Prozessanschluss |
| 11 | zweiter Träger |
| 13 | zweite Druckkammer |
| 15 | Übertragungsmembran |
| 17 | Druckübertragungspfad |
| 19 | Membranbett |
| 21 | Membranbett |
| 23 | Körper |
| 25 | Sensormodul |
| 27 | Empfangskörper |
| 29 | Druckempfangskammer |
| 31 | Gehäuse |
| 33 | Druckmesskammer |
| 35 | Drucksensor |
| 37 | Druckübertragungspfad |
| 39 | Schlitz |

**Patentansprüche**

1. Druckübertragungsmodul (1) zur Übertragung von Drücken (p), insb. von Drücken (p) kleiner gleich 100 mbar, mit

   - einer eine erste Druckkammer (5) nach außen abschließenden, von außen mit einem zu übertragenden Druck (p) beaufschlagbaren Trennmembran (7),
   - einer eine zweite Druckkammer (13) nach außen abschließenden Übertragungsmembran (15), und
   - einem die erste Druckkammer (5) mit der zweiten Druckkammer (13) verbindenden Druckübertragungspfad (17), bei dem
   - die erste und die zweite Druckkammer (5, 13) und der Druckübertragungspfad (17) mit einer Übertragungsflüssigkeit gefüllt sind, über die ein von außen auf die Trennmembran (7) einwirkender Druck (p) auf die Übertragungsmembran (15) übertragen wird,
   **dadurch gekennzeichnet, dass**
   - die Übertragungsflüssigkeit unter einem Vordruck ($p_v$), insb. einem Vordruck ($p_v$) von größer gleich 30 mbar, insb. größer gleich 50 mbar, steht, bei welchem die Trennmembran (7) und die Übertragungsmembran (15) aufgrund des Vordrucks ($p_v$) permanent vorgespannt sind,-
   die Trennmembran (7) und die Übertragungsmembran (15) unter dem Vordruck ($p_v$) eine Ausgangslage einnehmen, aus der sie durch den zu übertragenden Druck (p) ausgelenkt werden, und
   - die Ausgangslagen von Trennmembran (7) und Übertragungsmembran (15) innerhalb eines von der Größe des Vordrucks ($p_v$) und der Größe der zu übertragenden Drücke (p) abhängigen Auslenkungsbereichs der jeweiligen Membran liegen, in dem Auslenkungen der jeweiligen Membran aus deren Ausgangslage aufgrund deren Formgebung einen nicht axisymmetrischen Anteil, insb. einen antisymmetrischen Anteil, aufweisen.

2. Druckübertragungsmodul (1) gemäß Anspruch 1, **dadurch gekennzeichnet, dass** die Trennmembran (7) und die Übertragungsmembran (15) aus einem metallischen Werkstoff, insb. aus Edelstahl, Tantal oder Monell, bestehen, und eine Materialstärke (h) in der Größenordnung von 30 $\mu$m bis 200 $\mu$m aufweisen.

3. Druckübertragungsmodul (1) gemäß Anspruch 1, **dadurch gekennzeichnet, dass**

   - der Vordruck ($p_v$) größer gleich 30 mbar ist und insb. im Bereich von 30 mbar bis 200 mbar liegt,
   - die Trennmembran (7) und die Übertragungsmembran (15) einen auslenkbaren Bereich mit einem Durchmesser (d) von kleiner gleich 90 mm aufweisen, der insb. im Bereich in der Größenordnung von 90 mm bis 15 mm liegt, wobei der Durchmesser (d) umso geringer ist, je größer der Vordruck ($p_v$) ist.

4. Druckübertragungsmodul (1) gemäß Anspruch 1, **dadurch gekennzeichnet, dass**

- der Vordruck ($p_v$) größer gleich 50 mbar ist, und
- die Trennmembran (7) und die Übertragungsmembran (15) einen auslenkbaren Bereich mit einem Durchmesser (d) von kleiner gleich 50 mm aufweisen.

5. Druckübertragungsmodul (1) gemäß Anspruch 1, **dadurch gekennzeichnet, dass** der Vordruck ($p_v$) größer als ein durch die Übertragungsflüssigkeit im Druckübertragungsmodul (1) ausgeübter hydrostatischer Druck ist, wobei der Vordruck ($p_v$) insb. mindestens 10 mbar größer als ein bei einer Ausrichtung einer Längsachse des Druckübertragungsmoduls (1) parallel zur Erdanziehungskraft auftretender maximaler hydrostatischer Druck ist.

6. Druckübertragungsmodul (1) gemäß Anspruch 1, **dadurch gekennzeichnet, dass** die Trennmembran (7) und die Übertragungsmembran (15) identische Membranen sind.

7. Druckübertragungsmodul (1) gemäß Anspruch 1, **dadurch gekennzeichnet, dass**

- der Druckübertragungspfad (17) durch einen länglichen Körper (23) verläuft, wobei
- der Körper (23) insb. einen Außenumfang aufweist, der in von der ersten Druckkammer (5) zur zweiten Druckkammer (13) verlaufender Richtung variiert, insb. periodisch zwischen einem Minimalumfang und einem Maximalumfang variiert.

8. Druckübertragungsmodul gemäß Anspruch 1, **dadurch gekennzeichnet, dass** die Übertragungsflüssigkeit eine für Hochtemperaturanwendungen geeignete, insb. unter Vakuum vorkonditionierte, Flüssigkeit, insb. ein Polyolefin, ein Glycolether, ein Halocarbon, ein Silikonöl oder ein Polymethylphenyl-Silaxan, ist.

9. Druckübertragungsmodul gemäß Anspruch 1, **dadurch gekennzeichnet, dass**

- die Trennmembran (7) aus einem korrosionsbeständigen Metall, insb. aus Tantal, besteht, oder
- auf einer Außenseite der Trennmembran (7) eine Beschichtung, insb. eine Goldschicht, eine Beschichtung aus einem Fluorpolymer, insb. aus Polytetraflourethylen, oder eine Beschichtung aus Tantal vorgesehen ist.

10. Druckübertragungsmodul (1) gemäß Anspruch 1, **dadurch gekennzeichnet, dass** die Trennmembran (7) und die Übertragungsmembran (15) jeweils eine Kontur mit einem einen zentralen, ebenen Bereich (C) aufweisen, insb. einem zentralen Bereich (C) mit einem Durchmesser von nicht mehr als 2*a/3, insb. nicht mehr als a/2, wobei a der Radius des auslenkbaren Bereichs der jeweiligen Membran ist, der von einem gewellten Bereich (m) mit konzentrischen Wellenzügen, insb. konzentrischen Wellenzügen, deren Amplitude zunächst von innen nach außen hin abnimmt, wobei dann ein äußerster Wellenzug anschließt, der wieder eine größere Amplitude aufweist, umgeben ist.

11. Druckübertragungsmodul (1) gemäß Anspruch 10, **dadurch gekennzeichnet, dass**

- die Amplitude des an den äußersten Wellenzug von Trennmembran (7) und Übertragungsmembran (15) angrenzenden Wellenzugs etwa 1/3 bis 2/3 der Amplitude des an den zentralen Bereich (C) anschließenden Wellenzugs der jeweiligen Membran aufweist,
- die Wellenzüge abgesehen vom äußersten Wellenzug eine maximale Amplitude von nicht mehr als dem 4-fachen, insb. nicht mehr als dem 3-fachen, insb. nicht mehr als dem 2-fachen, der Materialstärke (h) der jeweiligen Membran aufweisen, und/oder
- die Wellenzüge abgesehen vom äußersten Wellenzug eine Wellenlänge aufweisen, die von einem Wellenzug zum nächsten Wellenzug um nicht mehr als 20%, insb. nicht mehr als 10% variiert.

12. Druckübertragungsmodul (1) gemäß Anspruch 1, **dadurch gekennzeichnet, dass**

- das Druckübertragungsmodul (1) einen ersten Träger (3) umfasst, in dem die nach außen durch die Trennmembran (7) abgeschlossene erste Druckkammer (5) eingeschlossen ist,
- der Träger (3) derart ausgebildet ist, dass er mit einem Prozessanschluss (9), insb. einem Flansch, ausgestattet werden kann, und
- der Prozessanschluss (9) als modulares Bauteil ausgebildet ist, das mit dem ohne Prozessanschluss (9) vorgefertigten und mit Übertragungsflüssigkeit befüllten Druckübertragungsmodul (1) verbindbar ist.

13. Verfahren zur Herstellung eines Druckübertragungsmoduls (1) gemäß Anspruch 1, **dadurch gekennzeichnet, dass**

- die Trennmembran (7) und Übertragungsmembran (15) gefertigt werden, wobei deren Formgebung durch Abprägen auf einem entsprechend geformten Stempel erzeugt wird,
- die vorgeprägte Trennmembran (7) druckdicht mit dem die erste Druckkammer (5) einschließenden ersten Träger (3) und die vorgeprägte Übertragungsmembran (15) druckdicht mit dem die zweite Druckkammer (13) einschließenden zweiten Träger (11) verbunden werden, und

- ein nach außen durch die Trennmembran (7) und die Übertragungsmembran (15) abgeschlossener Innenraum des Druckübertragungsmoduls (1) mit der Übertragungsflüssigkeit befüllt wird.

14. Verfahren gemäß Anspruch 13, **dadurch gekennzeichnet, dass** der Vordruck ($p_v$) im Innenraum des Druckübertragungsmoduls (1) eingestellt wird, indem

- der Innenraum vor der Befüllung evakuiert wird, und
- ein dem einzustellenden Vordruck ($p_v$) entsprechendes Volumen an Übertragungsflüssigkeit unter einem Befülldruck in den Innenraum eingebracht wird, insb. bei Raumtemperatur eingebracht wird,
- wobei das eingebrachte Volumen in Abhängigkeit von der Befülltemperatur derart bemessen wird, dass im Innenraum nach dem Verschließen des Innenraums der einzustellende Vordruck ($p_v$) herrscht.

15. Druckmessaufnehmer mit einem Übertragungsmodul (1) gemäß Anspruch 1, **dadurch gekennzeichnet, dass** der Druckmessaufnehmer ein Sensormodul (25) umfasst,

- das einen Empfangskörper (27) aufweist,

-- in dem eine Druckempfangskammer (29) eingeschlossen ist, und
- der mit dem Druckübertragungsmodul (1) derart druckdicht verbunden ist, dass die Übertragungsmembran (15) des Druckübertragungsmoduls (1) die Druckempfangskammer (29) nach außen abschließt,

- das einen in einer Druckmesskammer (33) angeordneten Drucksensor (35) aufweist,
- das einen die Druckempfangskammer (29) mit der Druckmesskammer (33) verbindenden Druckübertragungspfad (37) aufweist, und
- dessen Druckempfangskammer (29), dessen Druckmesskammer (33) und dessen Druckübertragungspfad (37) mit einer zweiten Übertragungsflüssigkeit gefüllt sind, über die ein über die Übertragungsmembran (15) in die Druckempfangskammer (29) übertragener Druck auf den Drucksensor (35) übertragen wird.

**Claims**

1. Pressure transmission module (1) designed to transmit pressures (p), particularly pressures (p) less than or equal to 100 mbar, with

- a process isolating diaphragm (7) closing a first pressure chamber (5) towards the outside, wherein said diaphragm can be subjected to a pressure (p) to be transmitted,
- a transmission diaphragm (15) closing a second pressure chamber (13) towards the outside, and
- a pressure transmission path (17) connecting the first pressure chamber (5) to the second pressure chamber (13), wherein
- the first and the second pressure chamber (5, 13) and the pressure transmission path (17) are filled with a transmission liquid, via which a pressure (p) acting on the process isolating diaphragm (7) from the outside is transmitted to the transmission diaphragm (15),
**characterized in that**
- the transmission liquid is subjected to an initial pressure ($p_v$), particularly an initial pressure ($p_v$) greater than or equal to 30 mbar, particularly greater than or equal to 50 mbar, wherein at said pressure the process isolating diaphragm (7) and the transmission diaphragm (15) are permanently pretensioned owing to the initial pressure ($p_v$)
- the process isolating diaphragm (7) and the transmission diaphragm (15) adopt an initial position under the effect of the initial pressure ($p_v$), wherein they are deflected out of said position due to the pressure (p) to be transmitted, and
- the initial positions of the process isolating diaphragm (7) and the transmission diaphragm (15) are situated inside a deflection area of the diaphragm that depends on the size of the initial pressure ($p_v$) and the size of the pressures (p) to be transmitted, wherein in said area deflections of the diaphragm from its initial position have a non-axisymmetric part, particularly an anti-symmetric part, due to the design.

2. Pressure transmission module (1) as claimed in Claim 1, **characterized in that** the process isolating diaphragm (7) and the transmission diaphragm (15) are made from a metal material, particularly stainless steel, tantalum or Monel, and have a material thickness (h) in the range from 30 $\mu$m to 200 $\mu$m.

3. Pressure transmission module (1) as claimed in Claim 1, **characterized in that**

- the initial pressure ($p_v$) is greater than or equal to 30 mbar and is particularly in a range from 30 mbar to 200 mbar,
- the process isolating diaphragm (7) and the transmission diaphragm (15) have a deflecting area with a diameter (d) less than or equal to 90 mm, which is particularly in the range between 90 mm and 15 mm in the area, wherein the diameter (d) is smaller the greater the initial pressure ($p_v$).

4. Pressure transmission module (1) as claimed in Claim 1, **characterized in that**

   - the initial pressure ($p_v$) is greater than or equal to 50 mbar, and
   - the process isolating diaphragm (7) and the transmission diaphragm (15) have a deflecting area with a diameter (d) less than or equal to 50 mm.

5. Pressure transmission module (1) as claimed in Claim 1, **characterized in that** the initial pressure ($p_v$) is greater than a hydrostatic pressure exerted by the transmission liquid in the pressure transmission module (1), wherein the initial pressure ($p_v$) is particularly at least 10 mbar greater than a maximum hydrostatic pressure occurring when a longitudinal axis of the pressure transmission module (1) is aligned parallel to the force of gravity.

6. Pressure transmission module (1) as claimed in Claim 1, **characterized in that** the process isolating diaphragm (7) and the transmission diaphragm (15) are identical diaphragms.

7. Pressure transmission module (1) as claimed in Claim 1, **characterized in that**

   - the pressure transmission path (17) passes through an elongated body (23), wherein
   - the body (23) particularly has an outer circumference which varies in the direction from the first pressure chamber (5) to the second pressure chamber (13), particularly which varies periodically between a minimum circumference and a maximum circumference.

8. Pressure transmission module (1) as claimed in Claim 1, **characterized in that** the transmission liquid is a liquid adapted to high-temperature applications, particularly preconditioned under vacuum, particularly a polyolefin, a glycol ether, a halocarbon, a silicone oil or a polymethylphenylsiloxane.

9. Pressure transmission module (1) as claimed in Claim 1, **characterized in that**

   - the process isolating diaphragm (7) is made from a corrosion-resistant metal, particularly tantalum, or
   - a coating is provided on an exterior face of the process isolating diaphragm (7), particularly a gold coating, a coating made from a fluoropolymer, particularly polytetrafluoroethylene, or a tantalum coating.

10. Pressure transmission module (1) as claimed in Claim 1, **characterized in that** the process isolating diaphragm (7) and the transmission diaphragm (15) each has a contour with a flat, central area (C), particularly a central area (C) with a diameter of not more than 2*a/3, particularly not more than a/2, wherein a is the radius of the deflecting area of the respective diaphragm, said area being surrounded by a corrugated area (m) with concentric wave trains, particularly concentric wave trains whose amplitude initially decreases from the interior towards the exterior, wherein an outermost wave train is then adjacent to this which has a larger amplitude once again.

11. Pressure transmission module (1) as claimed in Claim 10, **characterized in that**

   - the amplitude of the wave train adjacent to the outermost wave train of the process isolating diaphragm (7) and the transmission diaphragm (15) is around 1/3 to 2/3 of the amplitude of the wave train, adjacent to the central area (C), of the respective diaphragm,
   - the wave trains, with the exception of the outermost wave train, have a maximum amplitude of not more than four times, particularly not more than three times, particularly not more than twice the material thickness (h) of the respective diaphragm, and/or
   - the wave trains, with the exception of the outermost wave train, have a wave length which varies from one wave train to the wave train by not more than 20 %, particularly by not more than 10 %.

12. Pressure transmission module (1) as claimed in Claim 1, **characterized in that**

   - the pressure transmission module (1) comprises a first support (3) in which the first pressure chamber (5), which is closed towards the outside by the process isolating diaphragm (7), is enclosed
   - the support (3) is designed in such a way that it can be fitted with a process connection (9), particularly a flange, and
   - the process connection (9) is designed as a modular component, which can be connected to the pressure transmission module (1) which is preassembled without a process connection (9) and filled with transmission liquid.

**13.** Procedure for the production of a pressure transmission module (1) as claimed in Claim 1, **characterized in that**

- the process isolating diaphragm (7) and the transmission diaphragm (15) are fabricated, wherein their design is produced by imprinting on a stamp formed in an appropriate manner,
- the prestamped process isolating diaphragm (7) is connected in a pressure-tight manner to the first support (3) enclosing the first pressure chamber (5) and the prestamped transmission diaphragm (15) is connected in a pressure-tight manner to the second support (11) enclosing the second pressure chamber (13), and
- an interior space of the pressure transmission module (1), sealed to the outside by the process isolating diaphragm (7) and the transmission diaphragm (15), is filled with transmission liquid.

**14.** Procedure as claimed in Claim 13, **characterized in that** the initial pressure ($p_v$) is set in the interior space of the pressure transmission module (1), such that

- the interior space is evacuated before the filling process, and
- a volume of transmission liquid corresponding to the initial pressure ($p_v$) to be set is introduced into the interior space under a filling pressure, particularly at room temperature,
- wherein the volume introduced is adapted depending on the filling temperature in such a way that the initial pressure ($p_v$) to be set is present in the interior space after the sealing of the interior space.

**15.** Pressure sensor with a transmission module (1) as claimed in Claim 1, **characterized in that** the pressure sensor comprises a sensor module (25),

- which has a reception body (27),

-- in which a pressure reception chamber is (29) is enclosed, and
-- which is connected to the pressure transmission module (1) in a pressure-tight manner in such a way that the transmission diaphragm (15) of the pressure transmission module (1) closes the pressure reception chamber (29) towards the outside,

- which has a pressure sensor (35) arranged in a pressure measuring chamber (33),
- which has a pressure transmission path (37) connecting the pressure reception chamber (29) to the pressure measuring chamber (33), and
- whose pressure reception chamber (29), pressure measuring chamber (33) and pressure transmission path (37) are filled with a second transmission liquid, via which a pressure transmitted via the transmission diaphragm (15) into the pressure reception chamber (29) is transmitted to the pressure sensor (35).

**Revendications**

**1.** Module de transmission de pression (1) destiné à la transmission de pressions (p), notamment de pressions (p) inférieures ou égales à 100 mbar, avec

- une membrane de séparation (7) séparant une première chambre de pression (5) de l'extérieur, laquelle membrane peut être soumise de l'extérieur avec une pression (p) à transmettre,
- une membrane de transmission (15) séparant une deuxième chambre de pression (13) de l'extérieur, et
- un chemin de transmission de pression (17) reliant la première chambre de pression (5) avec la deuxième chambre de pression (13), chemin pour lequel
- la première et la deuxième chambre de pression (5, 13) et le chemin de transmission de pression (17) sont remplis avec un liquide de transmission, par l'intermédiaire duquel une pression (p) agissant de l'extérieur sur la membrane de séparation (7) est transmise à la membrane de transmission (15),
**caractérisé en ce que**
- le liquide de transmission est soumis à une pression initiale ($p_v$), notamment une pression initiale ($p_v$) supérieure ou égale à 30 mbar, notamment supérieure à 50 mbar, pression à laquelle la membrane de séparation (7) et la membrane de transmission (15) sont précontraintes en permanence en raison de la pression initiale ($p_v$)
- la membrane de séparation (7) et la membrane de transmission (15) adoptent une position initiale sous l'effet de la pression initiale ($p_v$), position à partir de laquelle elles sont déformées par la pression (p) à transmettre, et
- les positions initiales de la membrane de séparation (7) et de la membrane de transmission (15) se situent à l'intérieur d'une plage de déformation de la membrane respective, dépendant de la grandeur de la pression initiale ($p_v$) et de la grandeur des pressions (p) à transmettre, plage dans laquelle les déformations de la membrane respective présentent, en raison de leur conception, une part non axisymétrique, notamment une part antisymétrique.

**2.** Module de transmission de pression (1) selon la revendication 1, **caractérisé en ce que** la membrane de séparation (7) et la membrane de transmission (15) sont constituées d'un matériau métallique, notamment en inox, tantale ou Monell, et présentent une épaisseur de matériau (h) de l'ordre de grandeur de 30 $\mu$m à 200 $\mu$m.

3. Module de transmission de pression (1) selon la revendication 1, **caractérisé en ce que**

   - la pression initiale ($p_v$) est supérieure ou égale à 30 mbar et se situe notamment dans une gamme de 30 mbar à 200 mbar,
   - la membrane de séparation (7) et la membrane de transmission (15) présentent une zone déformable avec un diamètre (d) inférieur ou égal à 90 mm, qui se situe notamment dans une plage d'un ordre de grandeur de 90 mm à 15 mm, le diamètre (d) étant d'autant plus petit que la pression initiale ($p_v$) est grande.

4. Module de transmission de pression (1) selon la revendication 1, **caractérisé en ce que**

   - la pression initiale ($p_v$) est supérieure ou égale à 50 mbar, et
   - la membrane de séparation (7) et la membrane de transmission (15) présentent une zone déformable avec un diamètre (d) inférieur ou égal à 50 mm.

5. Module de transmission de pression (1) selon la revendication 1, **caractérisé en ce que** la pression initiale ($p_v$) est supérieure à une pression hydrostatique exercée par le liquide de transmission dans le module de transmission de pression (1), la pression initiale ($p_v$) étant notamment supérieure de 10 mbar à une pression hydrostatique maximale apparaissant en cas d'alignement d'un axe longitudinal du module de transmission de pression (1) parallèle à la gravité terrestre.

6. Module de transmission de pression (1) selon la revendication 1, **caractérisé en ce que** la membrane de séparation (7) et la membrane de transmission (15) sont des membranes identiques.

7. Module de transmission de pression (1) selon la revendication 1, **caractérisé en ce que**

   - le chemin de transmission de pression (17) passe par un corps allongé (23),
   - le corps (23) présentant un périmètre, qui varie dans la direction allant de la première chambre de pression (5) vers la deuxième chambre de pression (13), notamment qui varie périodiquement entre un périmètre minimal et un périmètre maximal.

8. Module de transmission de pression (1) selon la revendication 1, **caractérisé en ce que** le liquide de transmission est un liquide adapté aux applications haute température, notamment préconditionné sous vide, notamment un polyoléfine, un éther de glycol, un halocarbone, une huile de silicone ou un polyméthylphénylsiloxane.

9. Module de transmission de pression (1) selon la revendication 1, **caractérisé en ce**

   - **que** la membrane de séparation (7) est constituée d'un métal résistant à la corrosion, notamment en tantale, ou
   - **qu'**est prévu, sur la face extérieure de la membrane de séparation (7), un revêtement, notamment une couche d'or, un revêtement constitué d'un polymère fluoré, notamment en polytétrafluoroéthylène, ou un revêtement en tantale.

10. Module de transmission de pression (1) selon la revendication 1, **caractérisé en ce que** la membrane de séparation (7) et la membrane de transmission (15) présentent chacune un contour avec une zone centrale (C) plate, notamment une zone centrale (C) avec un diamètre ne dépassant pas 2*a/3, notamment ne dépassant pas a/2, a étant le rayon de la zone déformable de la membrane respective, laquelle zone est entourée par une zone ondulée (m) avec des trains d'ondes concentriques, notamment des trains d'ondes concentriques dont l'amplitude diminue dans un premier temps de l'intérieur vers l'extérieur, un train d'ondes adjacent, situé le plus à l'extérieur, présentant de nouveau une amplitude plus grande.

11. Module de transmission de pression (1) selon la revendication 10, **caractérisé en ce que**

    - l'amplitude du train d'ondes avoisinant le train d'ondes situé le plus à l'extérieur de la membrane de séparation (7) et de la membrane de transmission (15) présente environ 1/3 à 2/3 de l'amplitude du train d'ondes, adjacent à la zone centrale (C), de la membrane respective,
    - les trains d'ondes, à l'exception du train d'ondes situé le plus à l'extérieur, présentent une amplitude maximale ne dépassant pas le quadruple, notamment ne dépassant pas le triple, notamment ne dépassant pas le double de l'épaisseur de matériau (h) de la membrane respective, et/ou
    - les trains d'ondes, à l'exception du train d'ondes situé le plus à l'extérieur, présentent une longueur d'onde, qui varie d'un train d'ondes au train d'ondes suivant d'un maximum de 20 %, notamment d'un maximum de 10 %.

**12.** Module de transmission de pression (1) selon la revendication 1, **caractérisé en ce que**

- le module de transmission de pression (1) comprend un premier support (3), dans lequel est enfermée la première chambre de pression (5) séparée de l'extérieur par la membrane de séparation (7),
- le support (3) est conçu de telle sorte qu'il puisse être pourvu d'un raccord process (9), notamment d'une bride, et
- le raccord process (9) est conçu en tant que composant modulaire, lequel peut être relié avec le module de transmission de pression (1) préconfectionné sans raccord process (9) et rempli de liquide de transmission.

**13.** Procédé destiné à la fabrication d'un module de transmission de pression (1) selon la revendication 1, **caractérisé en ce que**

- la membrane de séparation (7) et la membrane de transmission (15) sont fabriquées, leur conception étant réalisée par estampage sur une matrice formée de façon appropriée,
- la membrane de séparation (7) préestampée étant reliée de façon étanche à la pression avec le premier support (3) enfermant la première chambre de pression (5) et la membrane de transmission (15) préestampée étant reliée de façon étanche à la pression avec le deuxième support (11) enfermant la deuxième chambre de pression (13), et
- un espace intérieur du module de transmission de pression (1), séparé de l'extérieur par la membrane de séparation (7) et la membrane de transmission (15), est rempli avec le liquide de transmission.

**14.** Procédé selon la revendication 13, **caractérisé en ce que** la pression initiale ($p_v$) est réglée dans l'espace intérieur du module de transmission de pression (1), **en ce que**

- l'air de l'espace intérieur est évacué avant le remplissage, et
- un volume de liquide de transmission correspondant à la pression initiale ($p_v$) à régler est introduit dans l'espace intérieur sous une pression de remplissage, notamment à température ambiante,
- le volume introduit est adapté en fonction de la température de remplissage, de telle sorte que la pression initiale ($p_v$) à régler règne dans l'espace intérieur après l'obturation de l'espace intérieur.

**15.** Capteur de pression avec un module de transmission (1) selon la revendication 1, **caractérisé en ce que** le capteur de pression comprend un module capteur (25),

- qui comporte un corps de réception (27),

-- dans lequel est enfermée la chambre de réception de pression (29), et
-- qui est relié de façon étanche à la pression avec le module de transmission de pression (1) de telle sorte que la membrane de transmission (15) du module de transmission de pression (1) sépare de l'extérieur la chambre de réception de pression (29),

- qui comporte un capteur de pression (35) disposé dans une chambre de mesure de pression (33),
- qui comporte un chemin de transmission de pression (37) reliant la chambre de réception de pression (29) avec la chambre de mesure de pression (33), et
- dont la chambre de réception de pression (29), dont la chambre de mesure de pression (33) et dont le chemin de transmission de pression (37) sont remplis avec un deuxième liquide de transmission, par l'intermédiaire duquel une pression transmise par le biais de la membrane de transmission (15) dans la chambre de réception de pression (29) est transmise au capteur de pression (35).

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006049942
- DE 102005023021 A1
- DE 102004052950 A1
- DE 102008033337 A1
- DE 102012110771 A1
- DE 102014103142